# EUROPEAN PATENT APPLICATION

(11) **EP 3 995 603 A1**
(43) Date of publication of application: **11.05.2022**
(21) Application number: 20306325.0
(22) Date of filing: 04.11.2020
(51) Int. Cl.: C25B 1/23, C25B 11/032, C25B 11/054, C25B 11/065, C25B 11/075, B01J 23/75

(54) **ELECTROCATALYTIC MATERIAL COMPRISING NITROGEN-RICH CARBON NANOSHEETS WITH INCLUSIONS OF METAL ATOMS AND USE THEREOF**

(71) Applicant: Centre national de la recherche scientifique, 75016 Paris (FR); Université de Montpellier, 34090 Montpellier (FR); Ecole Nationale Supérieure de Chimie de Montpellier, 34090 Montpellier (FR)
(72) Inventor: VOIRY, Damien, 34000 Montpellier (FR); QI, Kun, 34000 Montpellier (FR)
(74) Representative: Novagraaf Technologies

(57) **Abstract**

The present invention belongs to the field of catalytic chemistry, and more specifically to catalysed reduction chemical reactions, preferably of CO₂ into CO.

The present invention relates to a new catalyst compound comprising nitrogen-rich carbon nanosheets and nickel atoms, wherein the nickel atoms are coordinated with X atoms of nitrogen, X being comprised in the range from 3 to 4, supported on the carbon nanosheets and its use thereof in a reduction chemical reaction, preferably in reduction of CO₂ into CO. The invention also relates to the process of manufacture of said catalyst compound and to a process of reduction of CO₂ into CO.

## Description

### Technical field

The present invention belongs to the field of catalytic chemistry, and more specifically to catalysed reduction chemical reactions, preferably of CO₂ into CO.

The present invention relates to a new catalyst compound comprising nitrogen-rich carbon nanosheets and nickel atoms, wherein the nickel atoms are coordinated with X atoms of nitrogen, X being comprised in the range from 3 to 4, supported on the carbon nanosheets and its use thereof in a reduction chemical reaction, preferably in reduction of CO₂ into CO. The invention also relates to the process of manufacture of said catalyst compound and to a process of reduction of CO₂ into CO.

In the description below, references between **[]** refer to the list of references at the end of the examples.

### Technical background

The release of carbon dioxide (CO₂) is a major concern for the environment. Its capture and recycling into small organic bricks such as carbon monoxide (CO), formic acid, methane or methanol could prove to be very advantageous.

CO is a widely used chemical in industry and is used in the production of longer hydrocarbon molecules or aldehydes; and thus would benefit from being easier and cheaper to produce and more environmentally friendly.

In particular, the conversion of CO₂ into CO is an attractive method as CO combined with hydrogen plays a key role in the Fisher Tropsh process for the production of longer hydrocarbon molecules.

CO is also involved in the hydroformylation of alkene to process aldehyde. The CO market was estimated to reach 400 million € in 2019. Currently CO is produced in the reforming plant from the reduction of CO₂ on carbon or water at temperatures larger than 800°C. Other synthetic routes based on splitting of formic acid or CaCO₃ have been proposed and investigated at laboratory scales.

There is therefore a need for an easier and cheaper way to produce CO in large quantities, in a way that is both economic and environment friendly.

Among the different electrocatalysts, transition metal particles have demonstrated activities for the conversion of CO₂ into CO. Examples of transition metals include Ag, Sn and Au. Alternatively, nickel nanoparticles and Ni-supported single atoms have been identified as potential electrocatalytic materials but the selectivity of the reaction against the production of hydrogen and/or the ease of fabrication of the electrocatalyst remains limited.

### Detailed description of the invention

Applicant has developed a new catalyst compound that solves all of the problems listed above.

The present invention deals with a new catalyst compound, its manufacture process and its applications, such as a method to convert (reduction) CO₂ into CO at room temperature and atmospheric pressure. Being able to produce CO at room temperature and atmospheric pressure, with high selectivity and continuously, is to the knowledge of Applicant, something that was not observed in the art.

Applicant surprisingly found out that using a nitrogen-rich carbon nanosheets with inclusions of nickel atoms as a catalyst according to the invention gives very good yields in conversion of CO₂ into CO. When integrated into a flow reactor, the current density may reach values approaching 200 mA.cm⁻² and the reaction is over 99 % selective towards the conversion of CO₂ into CO. According to the present invention, the parameters such as the electrolyte and CO₂ fluxes in the reactor may also be optimized in order to maximize the performance of the catalyst compound according to the invention. The catalytic materials can sustain the performance for at least 100 hours.

The catalyst compound of the invention is based on the inclusion of nickel atoms into nitrogen-rich carbon nanosheets. The individual nickel atoms may be coordinated in several nitrogen atoms in the NiNx coordination structure with X comprised in the range from 3 to 4, as confirmed by Extended X-ray absorption fine structure (EXAFS) and X-ray absorption near edge structure (XANES) measurements.

An object of the invention is thus a catalyst compound comprising nitrogen-rich carbon nanosheets and nickel atoms wherein the nickel atoms are coordinated with X atoms of nitrogen, X being comprised in the range from 3 to 4, supported on the carbon nanosheets. In the catalyst, nickel atom that are coordinated to nitrogen atoms are usually either coordinated to 3 or 4 nitrogen atoms in the form of NiNx with X = 3 or 4. This explains why overall, the value of X may be in the range from 3 to 4. It is meant by "supported on the carbon nanosheets" that the coordinated nickel atoms are localized on a thin carbon-based material with a two dimensional morphology.

In particular, some advantages of the catalyst compound according to the invention are listed below:
- the catalyst compound of the invention is very efficient to reduce CO₂ into CO, with yields over 3 % per square centimetre of electrodes using a flow reactor,
- the catalyst compound of the invention does not need any harsh conditions of reaction to be active, and is already fully functional at room temperature and at atmospheric pressure,
- the process of manufacture of the catalyst compound of the invention is cheap and easy to implement, mostly thanks to the use of NaCl crystal as template for growing the catalyst,
- the process of manufacture of the catalyst compound of the invention enables the formation of catalyst in the form of thin 2D-like nanosheets of carbon with inclusion of individual nitrogen and nickel atoms,
- Ni atoms do not form nanoparticles on the carbon nanosheets like they do in known catalysts compounds consisting of Ni nanoparticles supported on nitrogen rich carbon nanosheets (Ni-NP@NC) which gives the advantage of increasing the selectivity towards the conversion of CO₂ to CO compared to the hydrogen evolution reaction.

Advantageously, the catalyst compound according to the invention may have a two dimensional morphology, the thickness of which being from 1 to 10 nm and the lateral size being from 100 nm to 1000 nm respectively.

It is meant by carbon nanosheets, a carbon-based material with a thickness of less than 10 nm and lateral dimensions of at least 100 nm. According to the invention, the carbon nanosheets are enriched with nitrogen atoms. The presence of nitrogen atoms stabilizes the individual atoms of Ni on the carbon nanosheets (Ni@NC). The individual nickel atoms are coordinated with 3 to 4 atoms of nitrogen.

Advantageously, in the catalyst compound according to the invention, the carbon nanosheets may have a thickness of less than 5 nm, and may preferably have a thickness of 3 nm. It may be less. The lateral dimensions may be larger than 100 nm and less than 1 µm.

Advantageously, the catalyst compound according to the invention may comprise carbon, nickel, nitrogen and optionally oxygen atoms.

Advantageously, the catalyst compound according to the invention may comprise from 2 to 8 at.% of nickel atoms, preferably from 3 to 5 at.% of nickel atoms or from 3.5 to 4.5 at.%, and more preferably 4 at.% of nickel atoms.

Advantageously, the catalyst compound according to the invention comprise from 5 to 15 at.% of nitrogen atoms, preferably from 7 to 12 at.% of nitrogen atoms or from 7.5 to 10 at.%, and more preferably 9 at.% of nitrogen atoms.

Advantageously, the catalyst compound according to the invention comprise from 5 to 20 at.% of oxygen atoms, preferably from 10 to 18 at.% of oxygen atoms or from 12 to 17 at.%, and more preferably 16 at.% of oxygen atoms.

Advantageously, the catalyst compound according to the invention comprise from 60 to 80 at.% of carbon atoms, preferably from 65 to 75 at.% of carbon atoms and more preferably 71 at.% of carbon atoms.

Advantageously, the catalyst compound may comprise:
- from 60 to 80 at.% of carbon atoms,
- from 2 to 8 at.% of nickel atoms,
- from 5 to 15 at.% of nitrogen atoms, and
- optionally, from 5 to 20 at.% of oxygen atoms.

Advantageously, the catalyst compound according to the invention is in the form of ultra-small atomic clusters of nickel supported on nitrogen-doped carbon nanosheets. It is mean by "ultra-small atomic clusters", a cluster from 1 and up to 50 nickel atoms.

The ultra-small atomic clusters of nickel are uniformly dispersed on the carbon nanosheets. The distance between the Ni atoms in these clusters is shorter than in the case of bulk nickel suggesting that the Ni atoms are mostly individually dispersed and coordinated with nitrogen atoms.

The invention also relates to a process of manufacture of a catalyst compound comprising a nitrogen-rich carbon nanosheets and nickel atoms according to the invention comprising the steps of:
a) mixing, in a solvent, an organic precursor with a nickel ions precursor and NaCl crystals,
b) pyrolysis of the mixture obtained in step a), preferably at a temperature from 700°C to 1000°C,
wherein the organic precursor is an organic molecule comprising at least one nitrogen atom.

Advantageously, the organic precursor may be chosen from any organic molecule comprising at least one nitrogen atom. The organic precursor may be an organic molecule bearing a moiety chosen in the group comprising methylimidazole, dicyanamide and dicyandiamide moieties. Preferably, the organic precursor may be chosen in the group comprising 2-methylimidazol, 1-ethyl-3-methylimidazolium, dicyanamide and dicyandiamide. The organic precursor may be for example chosen in the group comprising the precursors used in the article "*Single-atom-sized Ni-N4 sites anchored in three-dimensional hierarchical carbon nanostructures for the oxygen reduction reaction"* **[1]** or in the article *"Efficient alkaline hydrogen evolution on atomically dispersed Ni-Nx Species anchored porous carbon with embedded Ni nanoparticles by accelerating water dissociation kinetics"* **[2]*.***

Advantageously, the nickel ions precursor may be chosen in the group comprising Ni(NO₃)₂, Ni(CH₃COO)₂ and Ni(C₅H₇O₂)₂.

Advantageously, the NaCl crystals crystal structure may be face centred cube. The NaCl crystal size may be from 0.1 to 1 µm.

Advantageously, in step a) of the process according to the invention, the concentration of the organic precursor may be from 0.1 to 10 wt. %.

Advantageously, in step a) of the process according to the invention, the concentration of the nickel ions may be from 0.01 to 1 wt.%.

Advantageously, in step a) of the process according to the invention, the concentration of the NaCl crystals may be from 95 to 99 wt. %.

Advantageously, in step a) of the process according to the invention, the solvent may be water, an organic solvent chosen in a group comprising methanol, isopropanol and mixtures thereof or a mixture of water and organic solvent(s).

Advantageously, in step a) of the process according to the invention, all compounds may be mixed and vigorously shaken for a duration from 5 to 30 minutes.

Advantageously, prior to step b), the process according to the invention may further comprise a sub-step)a') wherein the solvent(s) may be left to evaporate at a temperature comprised in the range from room temperature (about 15 to 25°C) to 60°C.

Advantageously, step b) of the process according to the invention may be performed in a furnace (Vecstar VSTF3) under a nitrogen or an argon atmosphere.

Advantageously, in step b) of the process according to the invention, the temperature of the pyrolysis may be from 700°C to 1000°C, preferably 800°C. The duration of the pyrolysis may be from 1 to 5 hours, preferably 2 hours.

Advantageously, the process according to the invention may further comprise a step c) of treating under acidic condition the compound obtained in step b).

Advantageously, step c) of the process according to the invention may comprise a sub-step c') of dissolving the compound in water comprising an acid (acidic condition). The acidic conditions may be reached in step c) using sulfuric acid or hydrochloric acid. The Step c) may last from 6 to 24 hours, preferably 12 hours. The concentration of the acid may be from 0.05 to 0.5 mol.L⁻¹. Usually, the compound obtained in step b) may be dissolved in water and treated with hydrochloric acid for a duration of 12 hours at a concentration of 0.1 mol.L⁻¹ of hydrochloric acid, to leach out the Ni particles while preserving the single atoms that are strongly bounded to the carbon nanosheets.

The invention further relates to the use of the catalyst compound according to the invention as a catalyst, preferably to reduce CO₂ into CO.

The invention further relates to a process of reduction of CO₂ into CO comprising a step of contacting CO₂ (gas) with a catalyst compound according to the invention.

Advantageously, the process of reduction of CO₂ into CO may be carried on in a flow reactor. The CO₂ may flow from the back side of the electrode and react with the catalyst on the three-phase surface. With this flow system, the catalyst of the invention may perform a current density approaching to 200 mA.cm⁻² and more than 99% selective towards the conversion of CO₂ into CO. By adjusting the CO₂ flux that directly influences the surface reduction reaction kinetic, the system may for example exhibit a highest CO₂ to CO conversion efficiency of about 3%.

Advantageously, the process of reduction of CO₂ into CO may be carried out in a stack system with three flow reactors that may tandem together. The yield rate of CO may reach to about 75 ml min⁻¹mg⁻¹ and CO₂ to CO conversion efficiency may reach to about 9% which are all approach to threefold of the values of the single cell.

### Brief description of the figures

Figure 1 represents a) High resolution Transmission Electron Microscopy (HR-TEM) image of Ni@NC catalyst of example 1. b) Atomic Force Microscopy image of Ni@NC catalyst of example 1. c) Height profile for the Ni@NC catalyst of example 1.
Figure 2 represents HRTEM Elemental mapping of carbon (a), nitrogen (b), nickel (c) and their superposition (d) for Ni@NC catalyst compound 1. Scale bar: 2 µm.
Figure 3 represents the Faradaic efficiency in function of the potential (V vs. RHE) for the catalyst compound 1 the catalyst compound 1 and Ni-NP@NC measured in CO₂ saturated electrolyte.
Figure 4 represents a linear sweep voltammetry for catalyst compound 1 Ni@NC in argon and CO₂ saturated electrolytes measured in the flow reactor.
Figure 5 represents a) a linear sweep voltammetry for the catalyst compound 1 Ni@NC measured in H cell (diamond) and flow reactor (square). Insert is the flow cell reactor and b) the Faradaic efficiency for Ni@NC operating in a flow reactor with flow rates of 60 mL min⁻¹ for both CO₂ and the electrolyte.
Figure 6 represents a,b) the evolution of the current density of CO and H₂ from the catalyst compound 1 Ni@NC with the flow rates of CO₂ and electrolyte and c,d) the evolution of the Faradaic efficiency of CO and H₂ from Ni@NC with the flow rates of CO₂ and the electrolyte.
Figure 7 represents a) the 2D map of the CO₂-to-CO conversion percentage from the catalyst compound 1 Ni@NC with different CO₂ flow rates and constant electrolyte flow rate of 60 mL/min, and b) the evolution of the CO₂-to-CO conversion percentage with 1, 2 and 3 flow reactors connected in series. The geometrical area of the electrodes in the flow reactor is 1 cm².

### EXAMPLES

### Example 1: Preparation of a catalyst compound 1 according to the invention

Nitrogen-rich carbon nanosheets with inclusion of nickel atoms (called here after Ni@NC) was prepared by mixing the organic precursor with nickel ions (Ni(NO₃)₂, CAS: 13478-00-7) and NaCl (CAS: 7647-14-5) crystals. The crystal grains (of various size from 0.1 to 1 µm) of NaCl act as template and enable a surface-limited limited growth of the catalysts on their surface. The organic molecules (in this example 2-methylimidazole, CAS: 693-98-1) coordinated with the Ni²⁺ ions in a similar way as for metal organic frameworks (MOFs). The quantity of NaCl loaded with Ni-coordinated 2-methylimidazole can currently be scaled up to 1 kg at this stage of the development. 2.5 g of Ni(NO₃)₂·6H₂O and 10 g of 2-methylimidazol were dissolved in 125 mL of methanol. Then the two solutions were added into a flask followed by addition of 1 kg of NaCl powder under vigorous magnetic stirring for 10 h at room temperature. After slowly evaporating the methanol solvent at 35 °C, the powder was subjected to annealing at 800 °C under inert atmosphere (typically argon or nitrogen). After pyrolysis at T = 800 °C the organic molecules graphitize to form carbon nanosheets on the NaCl crystals. The material is then dissolved in water and treated with sulfuric acid for 12 hours at a concentration of 0.5 mol.L⁻¹ sulfuric acid is used to leach out the Ni particles while preserving the single atoms that are strongly bounded to the carbon nanosheets.

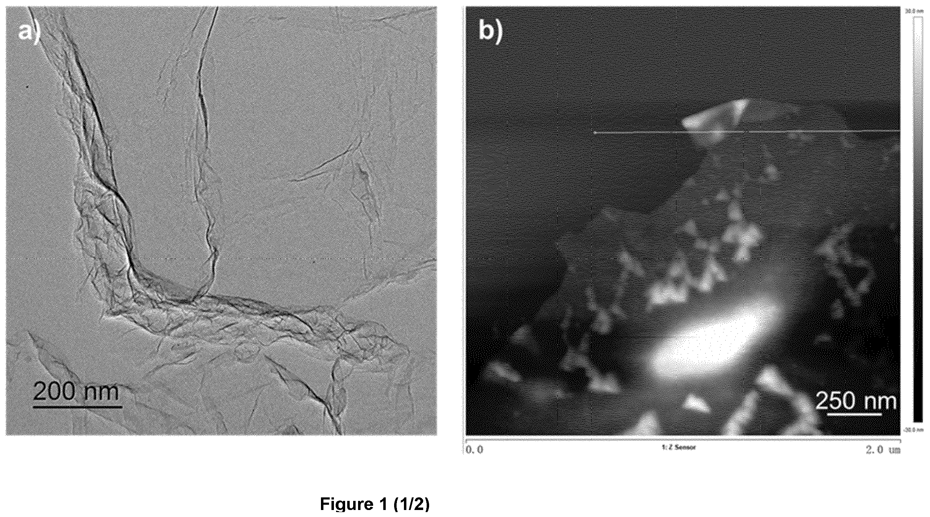

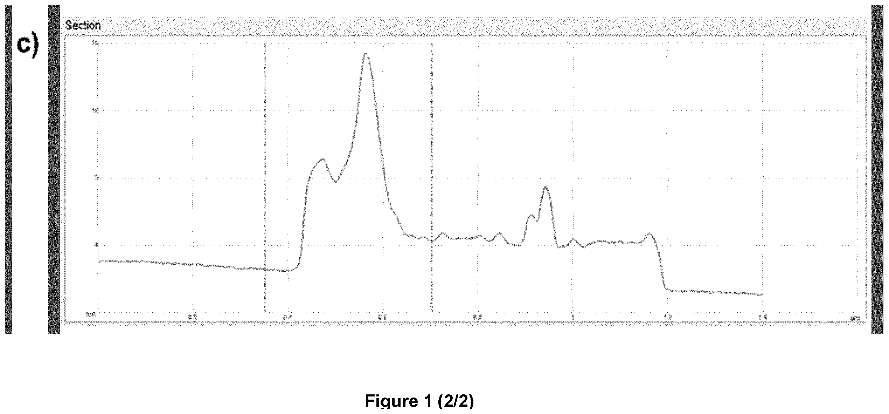

HR-TEM analyses confirmed the two dimensional morphology of the electrocatalytic materials similar to graphene nanosheets (Figure 1a). Atomic force microscopy (AFM) was used to measure the thickness of the nanosheets (Figure 1b). As seen from Figure 1c, the thickness of the nanosheets is estimated to be about 3 nm. The composition of the carbon nanosheets was analysed using X-ray photoelectron spectroscopy and elemental mapping under transmission electron microscope (TEM).

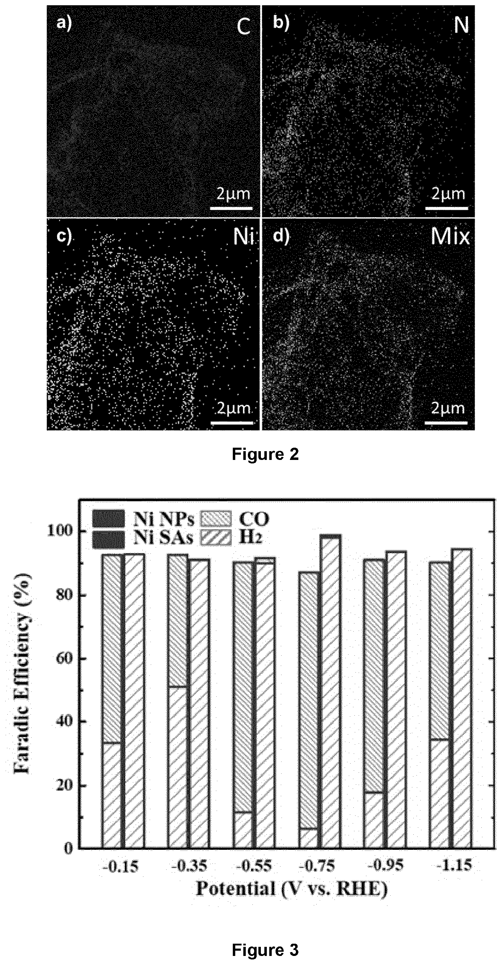

The elemental mapping of N, C, Ni is shown in Figure 2a-d. No obvious aggregation of the nitrogen and nickel atoms can be observed. This strongly supports the presence of individual Ni atoms on the nitrogen-rich carbon nanosheets. The presence of N-C bonds as well as Ni was confirmed by XPS measurements and the total amount of Ni and nitrogen can be tuned from 2 to 8 at.% and 5 to 15 at.% (Table 1):
The catalyst compound 1 elemental analysis is compiled in table 1 below:

**Table 1: Elemental analysis of catalyst compound 1**

| **Elemental composition** | **at.%** |
|---|---|
| Nitrogen | 8.9 |
| Carbon | 70.9 |
| Nickel | 4.0 |
| Oxygen | 16.2 |

In summary, the catalyst compound 1 is a nitrogen rich carbon nanosheets with the inclusion of Ni in the form of ultra-small atomic clusters.

### Example 2: Reduction of CO₂ (gas) using the catalyst compound 1

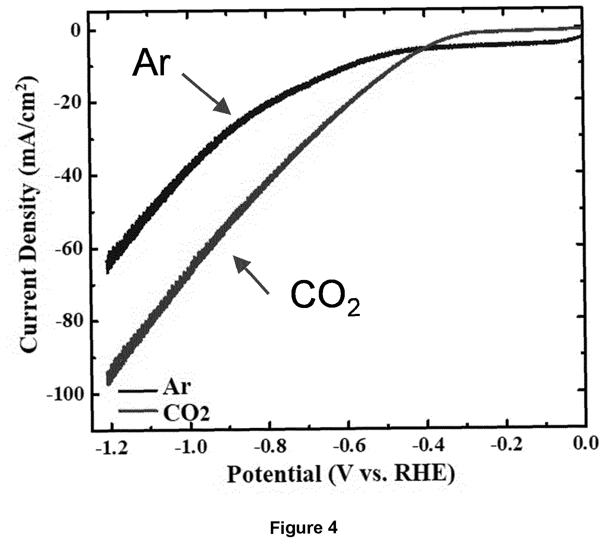

The Ni@CN catalyst compound 1 was tested in a traditional "H-cell" reactor in a 0.5 M KOH saturated with argon and CO₂ (Figure 3a). In presence of CO₂-saturated electrolyte, the reactivity of the Ni@CN is found to be much larger than in the case of argon-saturated electrolyte suggesting a high selectivity and activity towards the conversion of CO₂ (Figure 4). The gas products were then detected using gas chromatography after 30 min operation in CO₂ saturated electrolyte solution.

Only two gaseous products can be detected when using Ni@CN catalyst compound 1: H₂ from the electrolysis of water and CO from the reduction of CO₂.

No other liquid products were detected from the analysis of the electrolyte solution (Figure 3b).

This result indicates a high selectivity, which is close to 100%, towards gaseous products of the catalyst compound 1.

### Example 3: Comparison of Ni@NC catalyst compound 1 with Ni nanoparticles supported on nitrogen rich carbon nanosheets (thereafter Ni-NP@NC, not according to the invention)

Next, the catalyst compound 1 was compared with a catalyst consisting of Ni nanoparticles supported on nitrogen rich carbon nanosheets (Ni-NP@NC). Ni-NP@NC exhibits a low efficiency towards the production of CO and > 95% of the reaction products consist in hydrogen (H₂) from the hydrolysis of water (Figure 3b).

The results clearly demonstrate a dramatic improvement of the CO₂ reduction reaction performance when using Ni in the form of individual atoms compared to nanoparticles.

### Example 4: reduction of CO₂ in a flow reactor

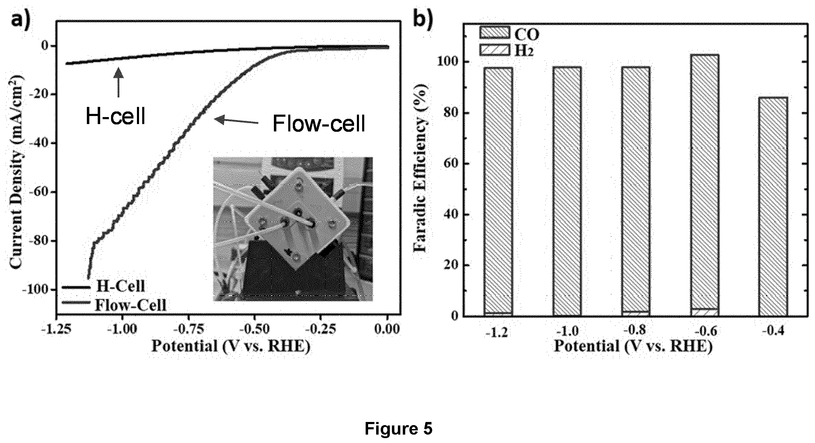

The catalyst compound 1 was implemented into a flow reactor in order to obtain a so called 3-phase reaction that allows performing the reaction of the interface between the liquid electrolyte, the CO₂ gas and the solid electrode (Inset: Figure 5a). The Ni@NC catalyst compound 1 was deposited on a commercial gas diffusion electrode and the same CO₂-saturated electrolyte was used as for the H cell reactor.

A larger current density was observed after saturating with CO₂, indicating a clear selectivity towards the reduction of CO₂ (Figure 4). Importantly, the use of a flow reactor allows performing the reaction continuously while the chemical products can be directly analysed downstream the reactor using an in-line gas chromatography set-up.

A dramatic improvement of the current is observed and the current density increases from approx. 10 mA.cm⁻² up to > 100 mA.cm⁻² (Figure 5a). More importantly, the Faradaic efficiency towards CO is also improved and reaches 95-100 % for all potentials between -0.3 and -1.2 V vs. RHE (Figure 5b).

The increase of the current density and the Faradaic efficiency reveals faster kinetics of the reaction and superior selectivity toward the production of CO compared to H₂ from the water splitting reaction. The influence of two important parameters was then analysed in the flow reactor: the flow of CO₂ and electrolyte in the reactor.

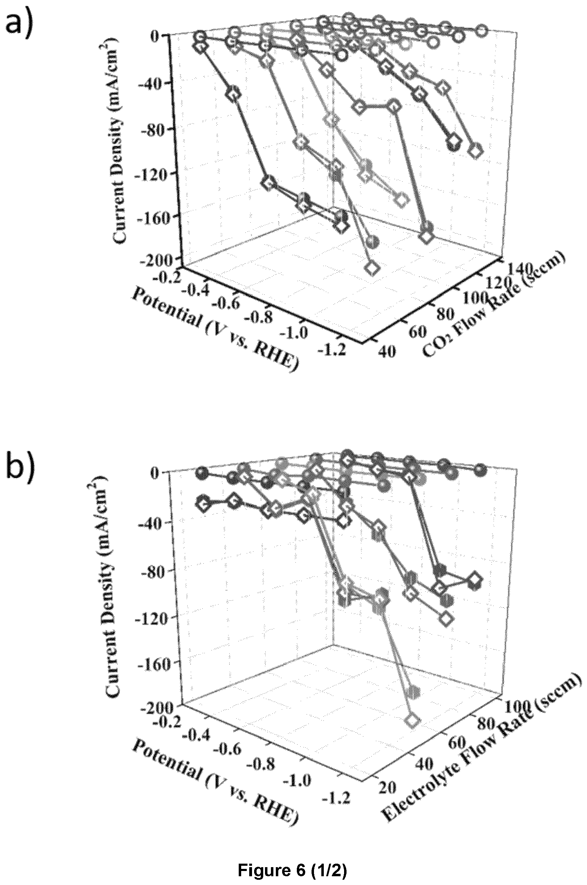

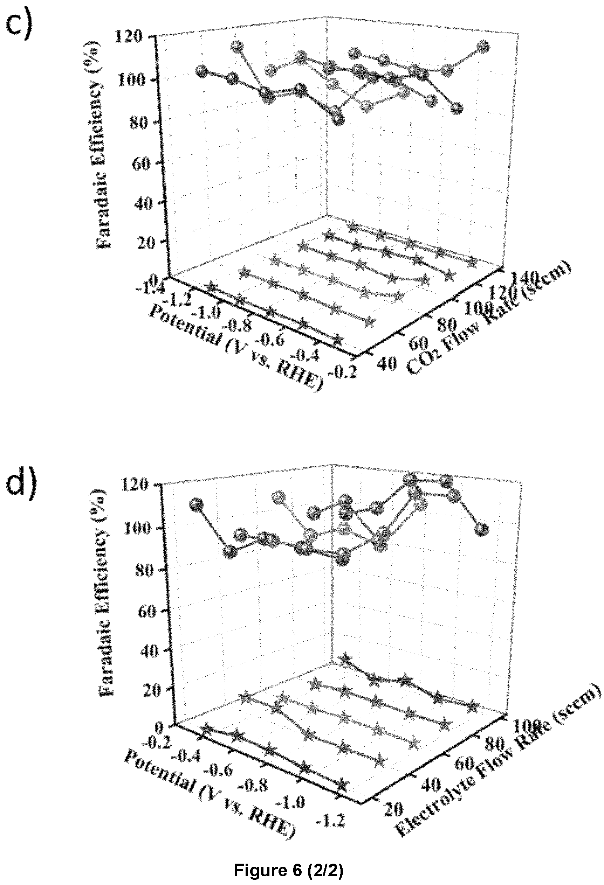

The flow of electrolyte and CO₂ gas was varied from 20 up to 100 mL.min⁻¹ and 40 to 140 mL.min⁻¹ respectively. The current density and the Faradaic efficiency were measured for each condition and at different potentials (Figure 6a-d). This allowed to map the behaviour of the reactor and it was found that a current density larger than 160 mA.cm⁻² with a selectivity of about 100 % towards CO is achieved with a CO₂ flow of 100 mL.min⁻¹ and an electrolyte flow of 60 mL.min⁻¹ (Figure 6a). The in-line gas chromatography analyses allowed to estimate the reaction yield over 1 cm² corresponding to the total exposed surface of the catalyst compounds 1 (Figure 6b).

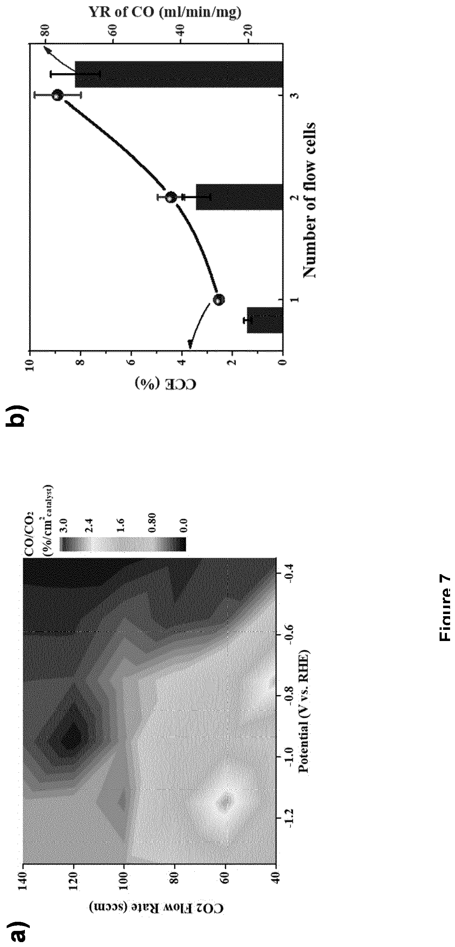

Using the optimal parameters, the CO₂-to-CO conversion efficiency can reach 3 % over 1 cm² and CO yield reach 14.05 mL/min/cm² per mg of catalyst compound 1. These results thus demonstrate a continuous conversion of 3 % of the CO₂ over 1 cm² (Figure 7a). When connecting 3 cells of 1 cm² in series, the conversion efficiency increases up to 10 % (Figure 7b), which means that the Ni@NC catalyst compound 1 can be used in flow reactors connected in series for increasing the conversion efficiency.

### List of references

**[1]** J. Mater. Chem. A, 2020,8, 15012-15022
**[2]** Energy Environ. Sci., 2019, 12, 149-156

## Claims

1. A catalyst compound comprising nitrogen-rich carbon nanosheets and nickel atoms wherein the nickel atoms are coordinated with X atoms of nitrogen, X being comprised in the range from 3 to 4, supported on the carbon nanosheet.

2. The compound according to claim 1 wherein the carbon nanosheets have a thickness of less than 5 nm, preferably 3 nm.

3. The compound according to any of preceding claims, comprising from 2 to 8 at.% of nickel atoms, preferably from 3 to 5 at.%.

4. The compound according to any of preceding claims, comprising from 5 to 15 at.% of nitrogen atoms, preferably from 7 to 12 at.%.

5. The compound according to any of preceding claims, wherein the compound is in the form of ultra-small atomic clusters of nickel supported on nitrogen-doped carbon nanosheets.

6. Use of the compound according to any of preceding claims as a catalyst, preferably to reduce CO₂ into CO.

7. A process of manufacture of catalyst compound comprising a nitrogen-rich carbon nanosheets and nickel atoms comprising the steps of:
a) mixing, in a solvent, an organic precursor with a nickel ions precursor and NaCl crystals,
b) pyrolysis of the mixture obtained in step a), preferably at a temperature from 700°C to 1000°C,
wherein the organic precursor is an organic molecule comprising at least one nitrogen atom.

8. The process according to preceding claim, wherein the organic molecule is chosen in the group of organic molecules bearing a moiety chosen in the group comprising methylimidazole, dicyanamide and dicyandiamide moieties.

9. The process according to claim 7 or 8, further comprising a step c) of treating under acidic condition the compound obtained in step b).

10. A process of reduction of CO₂ into CO comprising a step of contacting CO₂ (gas) with a catalyst compound (solid) according to any of preceding claims.

11. The process according to preceding claim, wherein the reduction reaction of CO₂ is done under atmospheric pressure and at room temperature.
